# EUROPÄISCHE PATENTSCHRIFT

(11) **EP 1 589 307 B1**
(45) Veröffentlichungstag und Bekanntmachung des Hinweises auf die Patenterteilung: **22.11.2006**
(21) Anmeldenummer: 05008212.2
(22) Anmeldetag: 14.04.2005
(51) Int. Cl.: F25D 3/11, F25D 13/06, A23L 3/36

(54) **Vorrichtung zum Kühlen und/oder Gefrieren von Produkten**
Device for cooling and/or freezing of products
Dispositif de refroidissement et/ou de congélation des produits

(30) Priorität: 22.04.2004 DE 102004020193
(43) Veröffentlichungstag der Anmeldung: 26.10.2005
(73) Patentinhaber: Linde Aktiengesellschaft, 65189 Wiesbaden (DE)
(72) Erfinder: Berghoff, Rudolf Erwin Dr., 22088 Wedel (DE)

(56) Entgegenhaltungen:
- WO-A-99/02931
- WO-A-20/05003657
- US-A- 2 610 476
- US-A- 3 664 149

## Beschreibung

Die Erfindung betrifft eine Vorrichtung zum Kühlen und/oder Gefrieren von Produkten mit einer mit Kühleinrichtungen versehenen Behandlungszone und einem in der Behandlungszone angeordneten Transportband zum Fördern der Produkte durch die Behandlungszone, wobei das Transportband durch ein Tragegestell unterstützt ist und über am Tragegestell angebrachte Gleitschienen geführt ist.

Eine Vorrichtung zum Kühlen gemäß dem Oberbegriff von Anspruch 1 ist aus US 2610476 bekannt.

Zum Kühlen und/oder Gefrieren von Produkten, insbesondere Lebensmitteln, werden häufig Einrichtungen verwendet, bei denen die Produkte durch eine Behandlungszone gefördert werden, in der Kühleinrichtungen vorgesehen sind. Weit verbreitet sind beispielsweise so genannte Tunnelfroster, bei denen Lebensmittel durch ein tunnelartig ausgebildetes Gehäuse befördert werden, indem ein Kühlmittel, insbesondere ein Flüssiggas wie z. B. flüssiger Stickstoff, auf die Lebensmittel gesprüht wird. Zum Fördern der Lebensmittel durch den Tunnelfroster wird üblicherweise ein Transportband eingesetzt, auf welchem die Lebensmittel kontinuierlich durch den Tunnelfroster bewegt werden und dabei kühlen bzw. gefrieren. Solche Transportbänder weisen typischerweise eine Breite von z. B. 200 bis 2000 mm auf. Die Transportbänder sind bei der Führung durch den Tunnelfroster, in Folge des Eigengewichts und dem auf dem Transportband befindlichem Produkt, mechanisch von unten zu unterstützen. Zur Unterstützung dient ein Tragegestell aus Rohren, Trägern und Blechen. Um die Reibung zwischen Transportband und Tragegestell zu minimieren, sind am Tragegestell Gleitschienen z. B. aus Kunststoff angebracht, über die das Transportband geführt wird. Die obere Fläche der Gleitschienen ist in der Regel flach, so dass das Transportband eben darüber geführt wird. Während des Frostens gefriert häufig Produkt am Transportband fest, welches am Frosterende nur schwer oder unter Beschädigung zu lösen ist.

Der vorliegenden Erfindung liegt daher die Aufgabe zugrunde, eine Vorrichtung der eingangsgenannten Art derart auszugestalten, dass ein Festfrieren der Produkte auf dem Transportband verhindert oder zumindest ein beschädigungsfreies Lösen von festgefrorenem Produkt ermöglicht wird.

Diese Aufgabe wird erfindungsgemäß gelöst durch eine Vorrichtung mit den Merkmalen des Anspruchs 1.

Der Erfindung liegt die Erkenntnis zugrunde, dass die Produkte nach vollständiger Durchfrdstung am Frosterende sehr schwer vom Transportband zu lösen sind. Dabei kommt es bei Ablösung am Frosterende nicht nur zur Produktzerstörung, sondern auch zur Beschädigung des Transportbandes. Deshalb wird vorgeschlagen, die Produkte bereits zu einem Zeitpunkt vom Transportband zu lösen, indem die Verbindung zwischen Produkt und Transportband noch nicht zu fest ist. Die Produktablösung vom Transportband erfolgt also nicht nur am Frosterende, sondern auch bereits innerhalb des Frosters, bevor das Produkt vollständig festgefroren ist. Hierzu ist die Form der Gleitschienen an der oberen Seite nicht flach, sondern zumindest abschnittsweise konvex und/oder konkav. Dadurch gleitet das Transportband nicht eben durch den Froster, sondern zumindest abschnittsweise auf gezielt vorgegebenen Krümmungen bzw. Radien, sodass eine Relativbewegung zwischen Transportband und Produkt Scherkräfte in den Kontaktflächen von Transportband und Produkt erzeugt, die zum Ablösen des Produktes führen.

Die Ablösung der Produkte vom Transportband kann innerhalb der Behandlungszone auch mehrfach erfolgen. Hierzu sind innerhalb der Behandlungszone mehrere konvex und/oder konkav geformte Abschnitte der Gleitschienen vorgesehen. Die Form der Erhebung in den Gleitschienen kann unterschiedlich gestaltet sein. Die Gleitschienen können anstelle einer Erhebung auch eine Vertiefung aufweisen, so dass sich die Produkte in einem Tal vom Transportband ablösen. Auch eine Kombination aus Erhebung und Vertiefung der Gleitschienen ist denkbar.

Gemäß einer besonders bevorzugten Ausführungsform der Erfindung wechseln sich konvexe und konkave Abschnitte der Gleitschienen längs der Transportrichtung ab. Auf diese Weise wird ein Festfrieren der Produkte auf dem Transportband weitgehend verhindert.

Die Erfindung kann bei allen denkbaren Vorrichtungen zum Kühlen und/oder Gefrieren von Produkten eingesetzt werden, bei denen die Produkte durch eine mit Kühleinrichtungen versehene Behandlungszone mittels eines Transportbandes gefördert werden. Ganz besonders spielt die Erfindung Ihre Vorteile beim Einsatz in Tunnelfrostern zum Frosten von Lebensmitteln aus. Bei solchen Tunnelfrostern sind in der Behandlungszone Sprühdüsen zum Aufsprühen von Flüssiggas auf die Lebensmittel vorgesehen.

### Mit der Erfindung ist eine ganze Reihe von Vorteilen verbunden:

Die Produkte gefrieren nicht so stark am Transportband an, da sie vorher gelöst werden. Außerdem sind die Produkte nach dem Frostvorgang weniger oder gar nicht beschädigt. Der Produktverlust (Ausschuss) istdeutlich geringer. Da die Produkte bereits vor Verlassen der Behandlungszone vom Transportband abgelöst werden, erleiden am Frosterende angebrachte Abstreifer weniger Beschädigungen und erreichen deutlich längere Standzeiten.

Im Folgenden soll die Erfindung anhand von in den Figuren schematisch dargestellten Ausführungsbeispielen näher erläutert werden:

Es zeigen
- Figur 1: eine abschnittsweise konvexe Gleitschiene mit darüberliegendem Transportband
- Figur 2: eine abschnittsweise konkave Gleitschiene mit darüberliegendem Transportband
- Figur 3: eine abschnittsweise konvex und konkave geformte Gleitschiene mit darüberliegendem Transportband

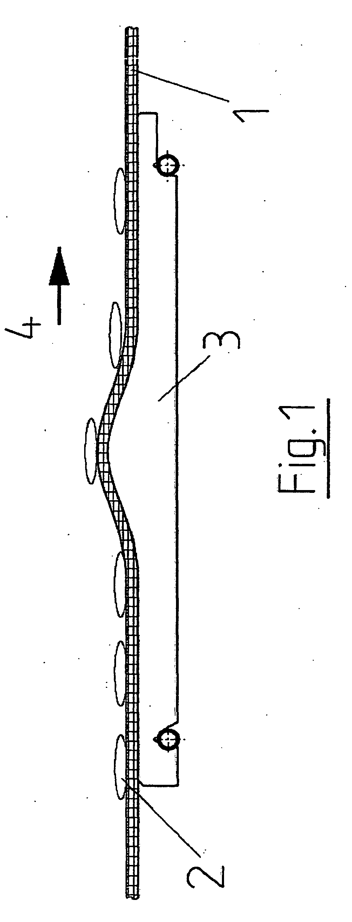

In Figur 1 ist eine Gleitschiene 3 dargestellt, die eine konvexe Erhebung aufweist. Das über die konvexe Gleitschiene 3 geführte Transportband 1 folgt dem Verlauf der konvexen Gleitschiene 3, so dass die auf dem Transportband 1 liegenden Produkte 2 bei einer Beförderung in Bandlaufrichtung 4 an der konvexen Erhöhung der Gleitschiene 3 vom Transportband 1 abgelöst werden.

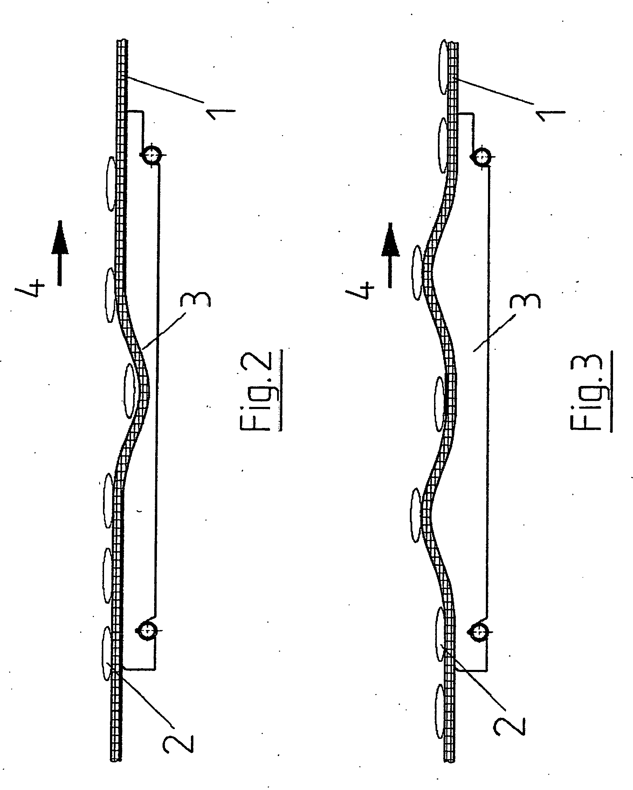

In Figur 2 ist eine Gleitschiene 3 mit konkaver Vertiefung dargestellt. Beim Transport der Produkte 2 über diese konkave Vertiefung in Bandlaufrichtung 4 werden ebenfalls die Produkte vom Transportband 1 abgelöst.

Schließlich ist in Figur 3 noch eine Gleitschiene 3 gezeigt, die sowohl konvexe Erhöhungen also auch eine konkave Vertiefung aufweist. Auf diese Weise wird besonders wirkungsvoll verhindert, dass die Produkte 2 auf dem Transportband 1 zu sehr festfrieren.

## Patentansprüche

1. Vorrichtung zum Kühlen und/oder Gefrieren von Produkten mit einer mit einer Kühleinrichtung versehenen Behandlungszone und einem in der Behandlungszone angeordneten Transportband (1) zum Fördern der Produkte (2) durch die Behandlungszone, wobei das Transportband (1) durch ein Tragegestell unterstützt ist und über am Tragegestell angebrachte Gleitschienen (3) geführt ist, wobei die Gleitschienen (3) an ihrer Oberseite zumindest abschnittsweise konvex und/oder konkav geformt sind, so dass das Transportband (1) auf vorgegebenen Krümmungen gleitet, **dadurch gekennzeichnet, dass** die Krümmungen so ausgebildet sind, dass Relativbewegungen zwischen Transportband und Produkten hervorgerufen werden, als deren Folge Scherkräfte in den Kontaktflächen von Transportband und Produkten entstehen, die zum Ablösen der Produkte vom Transportband bereits innerhalb der Behandlungszone führen.

2. Vorrichtung nach Anspruch 1, **dadurch gekennzeichnet, dass** innerhalb der Behandlungszone mehrere konvex und/oder konkav geformte Abschnitte der Gleitschienen (3) vorgesehen sind.

3. Vorrichtung nach Anspruch 2, **dadurch gekennzeichnet, dass** sich konvexe und konkave Abschnitte längs der Transportrichtung (4) abwechseln.

4. Vorrichtung nach einem der Ansprüche 1 bis 3, **dadurch gekennzeichnet, dass** die Behandlungszone als Tunnelfroster zum Frosten von Lebensmitteln ausgebildet ist, wobei in der Behandlungszone Sprühdüsen zum Aufsprühen von Flüssiggas auf die Lebensmittel vorgesehen sind.

## Claims

1. Device for cooling and/or freezing of products comprising a treatment zone, provided with a cooling means, and a conveyor belt (1), arranged in the treatment zone, for conveying the products (2) through the treatment zone, the conveyor belt (1) being supported by a supporting frame and being guided over sliding rails (3) fitted on the supporting frame, the sliding rails (3) being convexly and/or concavely shaped at least in certain portions on their upper side, so that the conveyor belt (1) slides on predetermined curvatures, **characterized in that** the curvatures are formed in such a way as to bring about relative movements between the conveyor belt and the products, causing shearing forces to occur in the contact surfaces of the conveyor belt and products, leading to the products becoming detached from the conveyor belt already within the treatment zone.

2. Device according to Claim 1, **characterized in that** a number of convexly and/or concavely shaped portions of the sliding rails (3) are provided within the treatment zone.

3. Device according to Claim 2, **characterized in that** convex and concave portions alternate along the conveying direction (4).

4. Device according to one of Claims 1 to 3, **characterized in that** the treatment zone is formed as a tunnel freezer for freezing food, spray nozzles for spraying liquid gas onto the food being provided in the treatment zone.

## Revendications

1. Dispositif pour refroidir et/ou congeler des produits, comprenant une zone de traitement pourvue d'un dispositif de refroidissement et une bande transporteuse (1) disposée dans la zone de traitement pour transporter les produits (2) à travers la zone de traitement, la bande transporteuse (1) étant supportée par un bâti porteur et étant guidée par le biais de rails de glissement (3) montés sur le bâti porteur, les rails de glissement (3) ayant au moins en partie une forme convexe ou concave sur leur côté supérieur, de sorte que la bande transporteuse (1) glisse sur des courbures prédéfinies, **caractérisé en ce que** les courbures sont réalisées de telle sorte que des déplacements relatifs entre la bande transporteuse et les produits soient causés, et qu'il en résulte des forces de cisaillement dans les faces de contact de la bande transporteuse et des produits, lesquelles conduisent au décollement des produits de la bande transporteuse déjà à l'intérieur de la zone de traitement.

2. Dispositif selon la revendication 1, **caractérisé en ce qu'**à l'intérieur de la zone de traitement, on prévoit plusieurs portions de formes convexes et/ou concaves des rails de glissement (3).

3. Dispositif selon la revendication 2, **caractérisé en ce que** des portions convexes et concaves alternent le long de la direction de transport (4).

4. Dispositif selon l'une quelconque des revendications 1 à 3, **caractérisé en ce que** la zone de traitement est réalisée sous la forme d'un congélateur à tunnel pour congeler des aliments, des buses de pulvérisation étant prévues dans la zone de traitement pour pulvériser du gaz liquéfié sur les aliments.
